# EUROPÄISCHE PATENTSCHRIFT

(11) **EP 2 928 709 B1**
(45) Veröffentlichungstag und Bekanntmachung des Hinweises auf die Patenterteilung: **05.09.2018**
(21) Anmeldenummer: 13788889.7
(22) Anmeldetag: 31.10.2013
(51) Int. Cl.: B60G 17/016, B60G 17/052

(54) **VERFAHREN ZUR VERKLEINERUNG DES WENDEKREISES EINES LASTZUGS UND LASTZUG, DER VERFAHRENSGEMÄSS BETREIBBAR IST**
METHOD FOR REDUCING THE TURNING CIRCLE OF A ROAD TRAIN AND ROAD TRAIN WHICH IS OPERABLE ACCORDING TO THE METHOD
PROCÉDÉ DE DIMINUTION DU RAYON DE BRAQUAGE D'UN TRAIN ROUTIER ET TRAIN ROUTIER POUVANT FONCTIONNER CONFORMÉMENT AU PROCÉDÉ

(30) Priorität: 05.12.2012 DE 102012023775
(43) Veröffentlichungstag der Anmeldung: 14.10.2015
(73) Patentinhaber: WABCO GmbH, 30453 Hannover (DE)
(72) Erfinder: SCHOPPE, Michael, 30163 Hannover (DE); WINKEL, Marcel, 30159 Hannover (DE); WOLF, Markus, 31137 Hildesheim (DE)
(74) Vertreter: Lauerwald, Jörg
(86) Internationale Anmeldenummer: PCT/EP2013/003281
(87) Internationale Veröffentlichungsnummer: WO 2014/086448

(56) Entgegenhaltungen:
- EP-A1- 2 168 788
- WO-A1-2007/050014
- DE-A1-102007 012 242
- US-B1- 6 240 339

## Beschreibung

Die Erfindung betrifft ein Verfahren zur Verkleinerung des Wendekreises eines Lastzugs, bestehend aus einem Zugfahrzeug mit mindestens einer Vorderachse und mindestens einer Hinterachse sowie mit mindestens einem Anhängefahrzeug mit wenigstens zwei Hinterachsen, und mit einer Einrichtung zur automatischen Verlagerung einer Achslast von der letzten Hinterachse auf die wenigstens eine davor angeordnete Hinterachse, sofern eine Kurvenfahrt erkannt wird, sowie einen Lastzug beziehungsweise eine lange Lastzug-Kombination (Road-Train), die so ausgebildet sind, dass diese gemäß dem in Rede stehenden Verfahren betreibbar sind.

Für Nutzfahrzeuge, insbesondere für Sattelzüge mit Zugfahrzeug und Sattelanhänger, aber auch für normale Lastkraftwagen mit oder ohne Anhängefahrzeug, ist es wichtig, dass deren Wendekreis möglichst klein ist. Ein kleiner Wendekreis erleichtert das Rangieren auf engen Speditionshöfen sowie das Durchfahren enger Kurven im Straßenverkehr. Probleme mit vergleichsweise großen Wendekreisen haben besonders Fahrzeuge mit großem Radstand sowie Fahrzeuge mit mehreren Anhängefahrzeugen. Bei derartigen Fahrzeugen besteht die Gefahr, dass beim Durchfahren enger Kurven an der Innenseite der Kurve stehende Hindernisse ungewollt berührt werden.

In der DE 10 2007 012 242 A1 ist ein gattungsgemäßes Verfahren beschrieben, dem die Aufgabe zugrunde liegt, durch einfache und kostengünstige Mittel bei einem Nutzfahrzeug den Wendekreis verkleinern zu können.

Maßgeblich für einen möglichst kleinen Wendekreis ist der Radstand eines Lastzugs, und zwar sowohl der Radstand des Zugfahrzeugs als auch der Radstand des mindestens einen Anhängefahrzeugs. Der Radstand muss für einen engen Wendekreis möglichst kurz sein. Bei einer normalen, gleichmäßigen Belastung eines Anhängefahrzeugs mit beispielsweise drei Hinterachsen ergibt sich ein mittlerer Radstand des Anhängefahrzeugs, der bei dem in der DE 10 2007 012 242 A1 beschriebenen Ausführungsbeispiel mit einem Sattelauflieger etwa von dem mit einer Sattelkupplung verbundenen Königszapfen des Sattelaufliegers bis etwa zur zweiten Hinterachse reicht. Zur Verringerung des effektiven Radstands wird die auf die letzte Achse des Sattelaufliegers wirkende Last verringert und auf die beiden davor liegenden Hinterachsen verlagert. Hierdurch ergibt sich ein reduzierter effektiver Radstand des Sattelaufliegers und damit ein verkleinerter Wendekreis, da der Radstand nun vom Königszapfen bis etwa zur Mitte zwischen den beiden vor der entlasteten Achse liegenden Achsen reicht. Eine Aktivierung des Vorgangs der Verlagerung der Achslast erfolgt dann, wenn ein besonders kleiner Wendekreis erforderlich ist. Diese Aktivierung kann durch einen vom Fahrer betätigten Schalter oder automatisch erfolgen.

EP 2168 788 A1 offenbart eine Vorrichtung und ein Verfahren zum Durchführen einer Radstandsregelung für Nutzfahrzeuge, umfassend eine oder mehrere Achsen mit Rädern, ein oder mehrere mit Druckluft beaufschlagbare Verstellmittel zum Verstellen mindestens einer der Achsen relativ zu einem Aufbau, einen Drucksensor zum Messen des Drucks der Druckluft in den Verstellmitteln und zum Erzeugen von entsprechenden Signalen und ein impulsgesteuertes Ventil zum wahlweisen Zu- und Abführen der Druckluft in die Verstellmittel und aus den Verstellmitteln heraus.

Vor diesem Hintergrund liegt der Erfindung die Aufgabe zugrunde, ein Verfahren zum Verringern des Wendekreises eines Lastzugs bestehend aus einem Zugfahrzeug und mindestens zwei Anhängefahrzeugen vorzuschlagen, das sich mit einfachen Mitteln bei einem Lastzug realisieren lässt, dessen Anhängefahrzeuge mit einer elektronisch gesteuerten Einrichtung zur Achslastentlastung versehen sind. Eine solche Einrichtung zur Achsentlastung für die letzte Hinterachse kann beispielsweise von einem Steuergerät angesteuert werden, welches auch die Aktuatoren einer elektronisch gesteuerten Bremsanlage oder eines Antiblockiersystems ansteuert.

Gelöst wird diese Aufgabe durch ein Verfahren zur Verkleinerung des Wendekreises eines Lastzugs, bestehend aus einem Zugfahrzeug mit mindestens einer Vorderachse und mindestens einer Hinterachse sowie mit mindestens einem Anhängefahrzeug mit wenigstens zwei Hinterachsen, und mit einer Einrichtung zur automatischen Verlagerung einer Achslast von der letzten Hin-terachse auf die wenigstens eine davor angeordnete Hinterachse, sofern eine Kurvenfahrt erkannt wird, sowie einen Lastzug beziehungsweise eine lange Lastzug-Kombination (Road-Train), die so ausgebildet sind, dass diese gemäß dem in Rede stehenden Verfahren betreibbar sind. Hierbei ist vorgesehen, dass bei einem Lastzug mit mindestens zwei Anhängefahrzeugen der Radius einer aktuell befahrenen Kurve ermittelt wird, dass dann, wenn der ermittelte Kurvenradius kleiner als ein zuvor festgelegter Grenz-Kurvenradius ist, ein Signal zur Verlagerung einer Achslast von der letzten Hinterachse auf die wenigstens eine davor angeordnete Hinterachse wenigstens des letzten Anhängefahrzeugs erzeugt wird, und dass dieses Signal an eine geeignete Betätigungsvorrichtung an dieser wenigstens einen, davor angeordneten Hinterachse übertragen wird.

Die Erfindung beruht auf der Überlegung, dass es bei besonders langen Lastzügen, wie sie beispielsweise unter der Bezeichnung Euro-Kombi bekannt sind, wichtig ist, den Wendekreis wenigstens des zweiten Anhängefahrzeugs sowie soweit vorhanden aller weiteren Anhängefahrzeuge möglichst klein werden zu lassen, um das Befahren enger Kurven sowie das Manövrieren an Laderampen und in einer Innenstadt zu erleichtern, indem das oder die Anhängefahrzeuge in Kurven und Kreisverkehren der Fahrspur des Zugfahrzeugs besser folgen. Erfindungsgemäß ist vorgesehen, dass beim Unterschreiten des Grenz-Kurvenradius ein Signal zur Verlagerung einer Achslast von der letzten Hinterachse auf die wenigstens eine, davor angeordnete Hinterachse jedes Anhängefahrzeugs erzeugt und an die Betätigungsvorrichtung dieser davor angeordneten Hinterachsen übertragen wird. Dadurch führt nicht nur der reduzierte Radstand des letzten Anhängefahrzeugs des Lastzugs zu einer Verkleinerung des Wendekreises des letzten Anhängefahrzeugs, sondern alle Anhängefahrzeuge des Lastzugs durchfahren eine Kurve mit verkleinertem Wendekreis.

Sofern das Zugfahrzeug ebenfalls mindestens zwei Hinterachsen umfasst, kann vorgesehen sein, dass beim Unterschreiten des Grenz-Kurvenradius das Signal zur Verlagerung einer Achslast von den letzten Hinterachsen des oder der Anhängefahrzeuge auch an eine Betätigungsvorrichtung zur Verlagerung einer Achslast von der letzten Hinterachse des Zugfahrzeugs auf die wenigstens eine davor angeordnete Hinterachse des Zugfahrzeugs bewirkt wird, so dass auch der Wendekreis des Zugfahrzeuges entsprechend verkleinert wird.

Auch dann, wenn das an das Zugfahrzeug ankuppelbare Anhängefahrzeug als kurzer Anhänger (Dolly) mit einer Sattelkupplung zur Aufnahme eines als Sattelauflieger ausgebildeten Anhängefahrzeugs ausgebildet ist, kann vorgesehen sein, dass beim Unterschreiten des Grenz-Kurvenradius und Unterschreiten einer vorgegebenen Fahrzeuggeschwindigkeit das Signal zur Verlagerung einer Achslast der letzten Hinterachse des oder der Anhängefahrzeuge auf die wenigstens eine davor angeordnete Hinterachse erzeugt und an eine geeignete Betätigungsvorrichtung an dieser Hinterachse übertragen wird.

Die Verlagerung der Achslast von der letzten Hinterachse auf die davor angeordnete Hinterachse erfolgt lediglich bis zu einer dadurch verursachten vorbestimmten Grenz-Überlastung der davor angeordnete Hinterachse, die maximal der gesetzlich zulässigen Achslast entspricht

Eine Kurvenfahrt kann durch eine automatische Auswertung der unterschiedlichen Radgeschwindigkeiten der linken und rechten Räder einer der Achsen des Zugfahrzeugs oder des ersten Anhängefahrzeugs, oder durch eine automatische Auswertung eines Blinkersignals, oder durch eine automatische Auswertung einer Lenkradbetätigung des Zugfahrzeugs erkannt werden.

Die Nutzung des erfindungsgemäßen Verfahrens ist bei einem Lastzug vorteilhaft, bestehend aus einem Zugfahrzeug mit mindestens einer Vorderachse und mindestens einer Hinterachse sowie mit zwei Anhängefahrzeugen, wobei das an das Zugfahrzeug angekuppelte Anhängefahrzeug als kurzer Anhänger (Dolly) mit einer Sattelkupplung zur Aufnahme eines zweiten, als Sattelauflieger ausgebildeten Anhängefahrzeugs ausgebildet ist, bei dem das zweite Anhängefahrzeug mindestens zwei Hinterachsen aufweist, und bei dem an jedem der beiden Anhängefahrzeuge Einrichtungen angeordnet sind, mittels denen eine Verlagerung einer Achslast von der jeweils letzten Hinterachse auf jeweils die wenigstens eine davor angeordnete Hinterachse der beiden Anhängefahrzeuge durchführbar ist.

Das Verfahren gemäß der Erfindung lässt sich auch mit Vorteil auch bei einer langen Lastzug-Kombination (Road-Train) nutzen, bestehend aus einem Zugfahrzeug mit mindestens einer Vorderachse und einer Hinterachse sowie mit mehr als zwei Anhängefahrzeugen mit jeweils mindestens zwei Hinterachsen, bei dem an jedem der mehr als zwei Anhängefahrzeuge Einrichtungen angeordnet sind, mittels denen eine Verlagerung einer Achslast von der jeweils letzten Hinterachse auf jeweils die wenigstens eine davor angeordnete Hinterachse der mehr als zwei Anhängefahrzeuge durchführbar ist.

Schließlich ist eine Steuerelektronik bzw. ein Steuergerät in dem Lastzug so ausgebildet und verwendbar, dass mittels dieser bzw. diesem das Verfahren gemäß der Erfindung sowie deren beschriebene Varianten und Ausführungsformen durchführbar sind.

Die Erfindung wird anhand einer Zeichnung weiter erläutert. In dieser zeigt
Fig. 1 einen als so genannten Euro-Kombi ausgebildeten Lastzug, bestehend aus einem Zugfahrzeug, ein damit gekuppeltes erstes Anhängefahrzeug und einen mit dem ersten, kurzen Anhängefahrzeug gekuppelten Sattelauflieger,
Fig. 2 eine schematische Draufsicht auf die drei Hinterachsen des Sattelaufliegers gemäß Fig. 1 mit Einrichtungen zur Achslastverlagerung, und
Fig. 3 eine lange Lastzug-Kombination (Road-Train), bestehend aus einem Zugfahrzeug und vier hintereinander angekuppelten Anhängefahrzeugen.

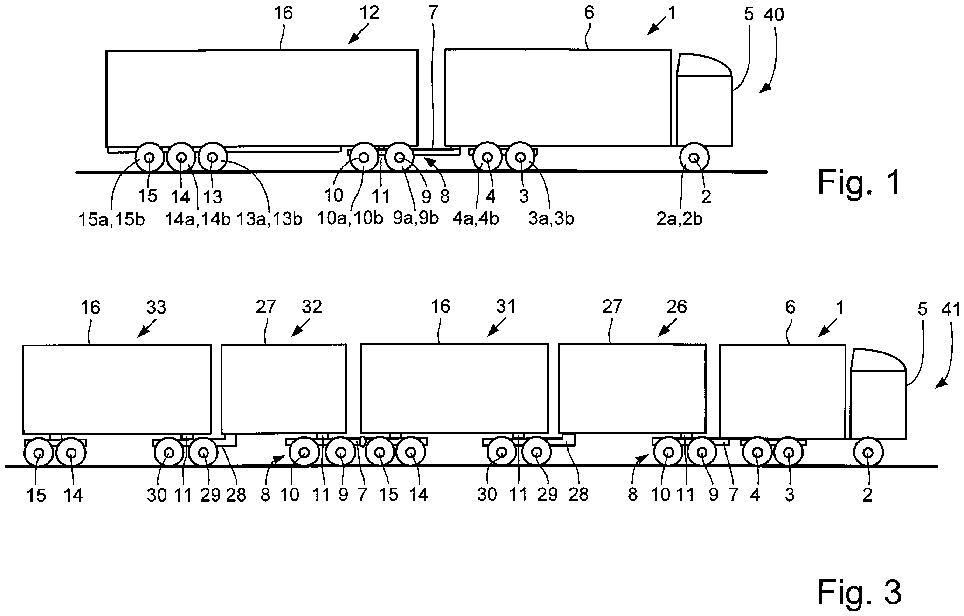

Der in Fig. 1 dargestellte Lastzug 40 besteht aus einem Zugfahrzeug 1 mit einer lenkbaren Vorderachse 2, einer hinteren Antriebsachse 3 und einer zweiten Hinterachse 4, wobei die zweite Hinterachse 4 als zweite Antriebsachse oder als entlastbare Schleppachse oder als Liftachse ausgebildet ist. An der lenkbaren Vorderachse 2 sind ein rechtes Vorderrad 2a und ein linkes Vorderrad 2b, an der hinteren Antriebsachse 3 ein rechtes Hinterrad 3a und ein linkes Hinterrad 3b und an der zweiten Hinterachse 4 ein rechtes Hinterrad 4a und ein linkes Hinterrad 4b angeordnet. Da der Lastzug 40 von der Seite dargestellt ist, sind in den Figuren 1 und 3 nur die dieser Seite zugeordneten Fahrzeugräder sichtbar. Das Zugfahrzeug 1 verfügt über ein Führerhaus 5, von dem aus ein Fahrer den Lastzug 40 in bekannter Weise führen kann. Das Zugfahrzeug 1 weist einen geschlossenen Aufbau 6 auf, oder es ist mit einem Container beladen.

Mittels einer Zugdeichsel 7 ist ein erstes Anhängefahrzeug 8, das als kurzer zweiachsiger Anhänger ausgebildet ist, mit dem Zugfahrzeug 1 über eine nicht im Detail dargestellte, jedoch übliche Anhängerkupplung gekuppelt. Der auch als Dolly-Achse bezeichnete kurze Anhänger 8 ist mit einem durch die Zugdeichsel 7 lenkbaren Radsatz 9 und einem nicht lenkbaren Radsatz 10 versehen. Der lenkbare Radsatz 9 weist ein rechtes Rad 9a sowie ein linkes Rad 9b auf, und der nicht lenkbare Radsatz 10 besteht aus einem rechten Rad 10a sowie einem linken Rad 10b. Ein nicht näher dargstellter Rahmen des Anhängefahrzeugs 8 ist mit einer Sattelkupplung 11 für einen Sattelauflieger 12 versehen, dessen nicht dargestellter Königszapfen mit der Sattelkupplung kuppelbar ist. Die Einzelheiten einer derartige Dolly-Achse sind aus der EP 1 466 813 A2 bekannt und nicht Teil der Erfindung.

Der Sattelauflieger 12 bildet ein zweites Anhängefahrzeug. Es weist eine erste Hinterachse 13, eine zweite Hinterachse 14 und eine dritte Hinterachse 15 auf, wobei die letztere Hinterachse 15 als entlastbare Schleppachse oder als Liftachse ausgebildet ist. Die erste Hinterachse 13 weist ein rechtes Rad 13a sowie ein linkes Rad 13b auf, die zweite Hinterachse 14 verfügt über ein rechtes Rad 14a und ein linkes Rad 14b, und die dritte Hinterachse 15 weist ein rechtes Rad 15a sowie ein linkes Rad 15b auf. Das zweite Anhängefahrzeug 12 ist mit einem geschlossenen Aufbau 16 dargestellt oder mit einem entsprechenden Container beladen.

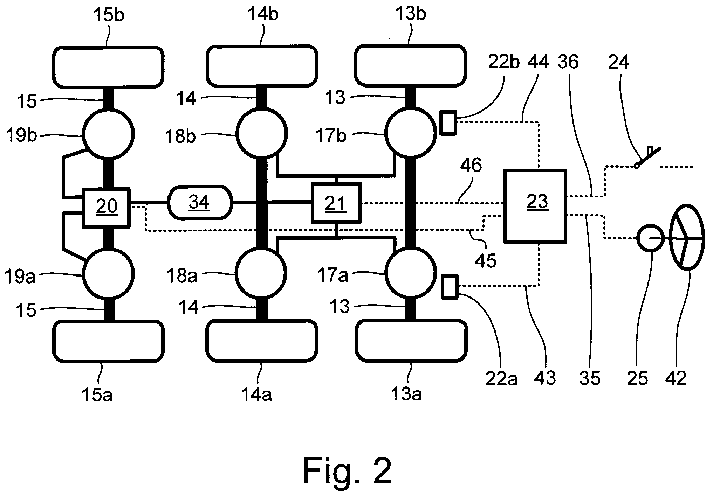

In Fig. 2 sind zum besseren Verständnis der Erfindung die Hinterachsen 13, 14, 15 des zweiten Anhängefahrzeugs 12 in einer schematischen Draufsicht dargestellt. Wie man erkennt, sind die drei Hinterachsen 13, 14, 15 durch jeweils zwei Federbälge 17a, 17b, 18a, 18b, 19a und 19b pro Hinterachse abgefedert. Das Luftvolumen in diesen Federbälgen 17a, 17b; 18a, 18b; 19a, 19b lässt sich durch Zufuhr von Druckluft beziehungsweise durch eine Entlüftung derselben regeln. Hierzu ist den Federbälgen 19a, 19b der letzten Hinterachse 15 ein so genanntes Liftachsventil 20 zugeordnet, durch dessen Ansteuerung diese letzte Hinterachse 15 nicht nur entlastbar ist, sondern sich gegebenenfalls ganz von der Fahrbahn abheben lässt. Die Federbälge 17a, 17b bzw.18a, 18b der beiden vorderen Hinterachsen 13 und 14 werden durch Ansteuerung eines gemeinsamen Luftfederventils 21 mit Druckluft versorgt oder entlüftet, welches ebenfalls eine Regelung der Luftfedervolumina erlaubt. Das Liftachsventil 20 und das Luftfederventil 21 sind an einem Druckluftvorratsbehälter 34 angeschlossen, dessen Druckluft zu den genannten Federbälgen 17a, 17b; 18a, 18b; 19a, 19b leitbar ist. Die Betätigung des Liftachsventils 20 und des Luftfederventils 21 erfolgt aufgrund von Steuerungssignalen eines Steuergeräts 23 bzw. mittels einer Steuerungselektronik, die in ein auch anderweitig genutztes Steuergerät eingebaut ist.

Zur erfindungsgemäßen Achslastverlagerung von der letzten Hinterachse 15 auf die beiden in Vorwärtsfahrtrichtung davor angeordneten Hinterachsen 13, 14 wird durch Betätigung des Liftachsventils 20 die Belastung der letzten Hinterachse 15 soweit verringert, dass sich an den beiden anderen Hinterachsen 13, 14 eine Belastung von jeweils maximal 130 % der zulässigen Achslast einstellt. Dies ist die Grenz-Überlastung der beiden anderen Hinterachsen 13 und 14, die für einen kurzzeitigen Betrieb und eine Maximalgeschwindigkeit von 25 km/h bis 35 km/h zugelassen ist. Die erfindungsgemäße Verlagerung der Achslast nach vorne bewirkt eine Verringerung des effektiven Radstandes des zweiten Anhängefahrzeugs 12 und damit eine Verringerung des Wendekreises desselben und damit auch des Lastzuges 40.

Ein schnelles Aktivieren der Verlagerung der Achslast lässt sich automatisch erreichen, wenn das Aktivierungssignal zur Achslastverlagerung beispielsweise von der Betätigung eines Blinkerschalters 24 durch den Fahrer ausgelöst wird. Da der Fahrer den Blinker zu betätigen hat, bevor er eine Kurvenfahrt beginnt, erfolgt die Aktivierung der Steuerung zur Achslastverlagerung bereits vor dem Einschwenken in eine Kurve. Ähnlich schnell erfolgt die Aktivierung der Achslastverlagerung, wenn das Aktivierungssignal beispielsweise durch die Betätigung des Lenkrades 42 durch den Fahrer ausgelöst wird, etwa durch Drehen des Lenkrades 42 um mehr als einen vorbestimmten Drehwinkel. Der Drehwinkel des Lenkrades 42 wird mittels eines Lenkwinkelsensors 25 und über eine Sensorleitung 35 an das Steuergerät 23 geleitet. Der Schaltzustand des Blinkerschalters 24 wird über eine Sensorleitung 36 zum Steuergerät 23 geführt.

Vorzugsweise wird das Aktivierungssignal nur dann ausgelöst, wenn die Fahrgeschwindigkeit nicht mehr als 25 km/h bis 35 km/h beträgt, und eine Kurve mit einem Radius von weniger als 100 m durchfahren wird.

Die Aktivierung der Funktion der Achslastverlagerung kann auch bei einem Durchfahren einer Kurve ausgelöst werden, indem die Differenz der Raddrehgeschwindigkeiten der kurveninneren und kurvenäußeren Räder des Lastzugs 40 gebildet wird, um den Kurvenradius zu berechnen und um das Aktivierungssignal in der beschriebenen Weise auszulösen, wenn eine vorgegebene Fahrgeschwindigkeit unterschritten wird und der errechnete Kurvenradius unter einem vorgegebenen Wert liegt.

In Fig. 2 sind ein rechter Drehgeschwindigkeitssensor 22a im Bereich des rechten Rades 13a der ersten Hinterachse 13 sowie ein linker Drehgeschwindigkeitssensor 22b im Bereich des linken Rades 13b der ersten Hinterachse 13 dargestellt. Die durch die beiden Drehgeschwindigkeitssensoren 22a und 22b gemessenen Drehgeschwindigkeiten werden über zugeordnete Sensorleitungen 43, 44 an eine Steuerelektronik bzw. an das Steuergerät 23 übermittelt. Steuergerät 23 ist dazu eingerichtet ist, das Signal zum Aktivieren der Achslastverlagerung zu erzeugen und an das Liftachsventil 20 sowie andere Signale an das Luftfederventil 21 über Steuerleitungen 45, 46 zu leiten, so dass die letzte Hinterachse 15 entlastet und die beiden davor liegenden Hinterachsen 13, 14 im Rahmen der zulässigen maximalen Grenzlast belastet werden, wenn auf Grund einer vorgegebenen Raddrehgeschwindigkeitsdifferenz eine Kurvenfahrt mit einem errechneten Kurvenradius und einer Fahrgeschwindigkeit unter vorgegebenen Werten erkannt wird.

Wie bereits kurz beschrieben, lässt sich das Signal zum Aktivieren der Achslastverlagerung auch durch das Betätigen eines mit dem Steuergerät 23 verbundenen Blinkerschalters 24 oder durch Auswerten der Signale des Lenkwinkelsensors 25 auslösen. Das Steuergerät 23 ist vorzugsweise als Steuerungselektronik oder als Software in eine elektronisch gesteuerte Anhängerbremsanlage oder in ein Antiblockiersystem integriert, und das Signal zum Aktivieren der Achslastverlagerung lässt sich schnell sowie einfach über einen genormten CAN-Bus an die Liftachsventile 20 und die Luftfederventile 21 der jeweiligen Anhängefahrzeuge übermitteln.

In Fig. 2 sind zwei Drehgeschwindigkeitssensoren 22a, 22b an der ersten Hinterachse 13 des zweiten Anhängefahrzeugs 12 dargestellt. Besonders vorteilhaft ist aber die Anordnung derartiger Drehgeschwindigkeitssensoren 22a, 22b am rechten Vorderrad 2a und am linken Vorderrad 2b der lenkbaren Vorderachse 2 des Zugfahrzeugs 1, weil dadurch das Signal zum Aktivieren der Achslastverlagerung bereits bei der Einfahrt in eine Kurve ausgelöst wird sowie die letzte Hinterachse 15 des Anhängefahrzeugs 12 bereits vor Einlauf des Anhängefahrzeugs 12 in eine Kurve entlastet wird, und sich damit der Radstand dieses zweiten Anhängefahrzeugs 12, wie beschrieben, entsprechend verringert.

Es ist aber auch möglich, entsprechende Drehgeschwindigkeitssensoren 22a, 22b an den Rädern 3a, 3b; 4a, 4b der hinteren Antriebsachse 3 oder der letzten Achse 4 des Zugfahrzeugs 1 oder an den Rädern 9a, 9b; 10a, 10b des ersten Anhängefahrzeugs 8 anzuordnen. Auch diese Anordnung ist vorteilhaft, da sich an diesen Rädern eine Drehzahldifferenz beim Einlaufen in eine Kurve einstellt, bevor sich eine Drehzahldifferenz an den Rädern 13a, 13b; 14a, 14b; 15a, 15b der Hinterachsen 13, 14, 15 des zweiten Anhängefahrzeugs 12 ergibt.

Schließlich ist es auch möglich, das Aktivierungssignal für die Achslastverlagerung aufgrund von Messwerten von nicht dargestellten Knickwinkelsensoren bzw. Drehwinkelsensoren an der Anhängerkupplung des Zugfahrzeugs 1 für die Zugdeichsel 7 oder an der Sattelkupplung 11 des ersten Anhängefahrzeugs 8 auslösen, da sich aus den hier festgestellten Auslenkwinkeln zwischen dem Zugfahrzeug 1 und der Zugdeichsel 7 oder dem ersten Anhängefahrzeug 8 und dem zweiten Anhängefahrzeug 12 ebenfalls ein Maß für den Radius der durchfahrenen Kurve ergibt, welches es erlaubt, das Aktivierungssignal für die Achslastverlagerung nur dann auszulösen, wenn eine Kurve mit einem Radius durchfahren wird, der kleiner als ein vorgegebener Grenz-Kurvenradius ist.

In Fig. 3 ist eine auch als Road-Train bekannte sehr lange Lastzug-Kombination 41 dargestellt, bei der sich das erfindungsgemäße Verfahren mit besonderem Vorteil anwenden lässt. Diese lange Lastzug-Kombination 41 besteht aus einem Zugfahrzeug 1, das dem Zugfahrzeug 1 der Fig. 1 entspricht und dementsprechend gleiche Bezugsziffern für gleiche Elemente aufweist. An das Zugfahrzeug 1 ist ein erstes Anhängefahrzeug 8 mittels einer Deichsel 7 angekuppelt. Auch dieses erste Anhängefahrzeug 8 entspricht dem ersten Anhängefahrzeug 8 in Fig. 1 und weist dementsprechend für die einzelnen Elemente dieselben Bezugsziffern auf. Mit dem ersten Anhängefahrzeug 8 ist ein zweites Anhängefahrzeug 26, das als Sattelauflieger ausgebildet ist, mittels einer Sattelkupplung 11 ankuppelt. Dieses zweite Anhängefahrzeug 26 ist mit einem Container 27 beladen und weist die Besonderheit eines verlängerten Fahrgestells 28 auf, an dem eine erste Hinterachse 29 und eine zweite Hinterachse 30 angeordnet sind, von denen die zweite Hinterachse 30 durch ein Aktivierungssignal an ein Liftachsventil 20 entlastet werden kann, wodurch die erste Hinterachse 29 wie beschrieben gleichzeitig belastet wird.

Im Bereich zwischen den beiden Hinterachsen 29 und 30 des zweiten Anhängefahrzeugs 26 ist wiederum eine Sattelkupplung 11 angeordnet, über die das zweite Anhängefahrzeug 26 mit einem dritten Anhängefahrzeug 31 gekuppelt ist. Dieses dritte Anhängefahrzeug 31 ist entsprechend dem zweiten Anhängefahrzeug 12 gemäß Fig. 1 ausgebildet. Es weist jedoch nur zwei Hinterachsen 14, 15 auf, von denen die hintere Hinterachse 15 durch ein Aktivierungssignal an ein zugeordnetes Liftachsventil entlastet werden kann, während die davor angeordnete Hinterachse 14 gleichzeitig belastet wird.

Eine derartige Achslastverlagerung findet in analoger Weise auch von der hinteren Hinterachse 30 des zweiten Anhängefahrzeugs 26 auf die vordere, erste Hinterachse 29 des zweiten Anhängefahrzeugs 26 statt.

An das dritte Anhängefahrzeug 31 ist wiederum ein als kurzer zweiachsiger Anhänger ausgebildetes Anhängefahrzeug 8 (Dolly) angekuppelt, das dem Anhängefahrzeug 8 gemäß Fig. 1 entspricht und dementsprechend mit denselben Bezugsziffern versehen ist. Auf diesem Anhängefahrzeug 8 liegt ebenfalls ein als Sattelauflieger ausgebildetes viertes Anhängefahrzeug 32 endseitig auf, das dem zweiten Anhängefahrzeug 26 entspricht und dementsprechend mit einem verlängerten Fahrgestell 28 und den beiden Hinterachsen 29 sowie 30 versehen ist. Auch dieses verlängerte Fahrgestell 28 ist mit einer Sattelkupplung 11 im Bereich zwischen den beiden Hinterachsen 29 und 30 versehen. Mittels dieser Sattelkupplung 11 ist ein weiteres, fünftes Anhängefahrzeug 33 angekuppelt, welches wie das zweite Anhängefahrzeug 12 gemäß Fig. 1 ausgebildet ist.

Ein aufgrund von Sensorinformationen über den Radius einer befahrenen Kurve in der beschriebenen Weise erzeugtes Aktivierungssignal zur Durchführung der beschriebenen Achslastverlagerung bewirkt eine Entlastung der in Vorwärtsfahrtrichtung gesehen hinteren Hinterachsen 30 sowie eine Belastung der vorderen Hinterachsen 29 der Anhängefahrzeuge 26 und 32. Ebenso erfolgt eine Entlastung der Hinterachsen 15 der Anhängefahrzeuge 31 und 33 sowie gleichzeitig eine Belastung der der in Vorwärtsfahrtrichtung davor liegenden Hinterachsen 14. Hierdurch wird bei dieser langen Lastzug-Kombination 41 ebenfalls durch die Verkürzung der Radsstände der Anhängefahrzeuge eine Verkleinerung des Wendekreises derselben erreicht, so dass auch eine solche lange Lastzug-Kombination 41 noch zum Befahren nicht allzu enger Kurven geeignet ist.

Die Erfindung ist nicht auf die in den Figuren dargestellten Ausführungsbeispiele beschränkt, sondern auch bei normalen Lastkraftwagen mit zwei oder drei Hinterachsen in Verbindung mit normalen Anhängern mit ebenfalls zwei oder drei Hinterachsen verwendbar, insbesondere in Verbindung mit den verschiedenen Lastzügen mit so genannten Euro-Kombi-Varianten, den so genannten Lang-Lastkraftfahrzeugen.

Alle in der vorstehenden Figurenbeschreibung, in den Ansprüchen und der Beschreibungseinleitung genannten Merkmale sind sowohl einzeln als auch in beliebiger Kombination miteinander nutzbar. Die Erfindung ist aber auf die beanspruchten Merkmalskombinationen beschränkt.

## Patentansprüche

1. Verfahren zur Verkleinerung des Wendekreises eines Lastzugs (40, 41), der mindestens zwei Anhängefahrzeuge aufweist, bestehend aus einem Zugfahrzeug (1) mit mindestens einer Vorderachse (2) und mindestens einer Hinterachse (3, 4) sowie mit mindestens einem Anhängefahrzeug (12, 26, 31, 32, 33) mit wenigstens zwei Hinterachsen (13, 14, 15; 29, 30), und mit einer Einrichtung zur automatischen Verlagerung einer Achslast von der letzten Hinterachse (15; 30) auf die wenigstens eine davor angeordnete Hinterachse (13, 14; 29), sofern eine Kurvenfahrt erkannt wird, **dadurch gekennzeichnet, dass** bei einem Lastzug (40, 41) mit mindestens zwei Anhängefahrzeugen (12, 26, 31, 32, 33) der Radius einer aktuell befahrenen Kurve ermittelt wird, dass dann, wenn der ermittelte Kurvenradius kleiner als ein zuvor festgelegter Grenz-Kurvenradius ist, ein Signal zur Verlagerung einer Achslast von der letzten Hinterachse (15; 30) auf die wenigstens eine davor angeordnete Hinterachse (13, 14; 29) wenigstens des letzten Anhängefahrzeugs (12, 26, 31, 32, 33) erzeugt wird, und dass dieses Signal an eine geeignete Betätigungsvorrichtung an dieser wenigstens einen, davor angeordneten Hinterachse (13, 14; 29) übertragen wird, wobei beim Unterschreiten des Grenz-Kurvenradius ein Signal zur Verlagerung einer Achslast von der letzten Hinterachse (15, 30) auf die wenigstens eine, davor angeordnete Hinterachse (13, 14; 29) jedes Anhängefahrzeugs (12, 26, 31, 32, 33) erzeugt und an die Betätigungsvorrichtung dieser davor angeordneten Hinterachsen (13, 29) übertragen wird.

2. Verfahren nach Anspruch 1, **dadurch gekennzeichnet, dass** das Zugfahrzeug (1) mindestens zwei Hinterachsen (3, 4) aufweist, und dass beim Unterschreiten des Grenz-Kurvenradius das Signal zur Verlagerung einer Achslast von der letzten Hinterachse (15, 30) des oder der Anhängefahrzeuge (12, 26, 31, 32, 33) auch an eine Betätigungsvorrichtung zur Verlagerung einer Achslast von der letzten Hinterachse (4) des Zugfahrzeugs (1) auf die wenigstens eine davor angeordnete Hinterachse (3) des Zugfahrzeugs (1) übertragen wird.

3. Verfahren nach einem der Ansprüche 1 bis 2, wobei wenigstens das an das Zugfahrzeug (1) angekuppelte Anhängefahrzeug (8) als ein kurzer Anhänger (Dolly) ausgebildet ist, mit einer Sattelkupplung (11) zur Aufnahme eines als Sattelauflieger ausgebildeten Anhängefahrzeugs (12, 26, 32), **dadurch gekennzeichnet, dass** beim Unterschreiten des Grenz-Kurvenradius und Unterschreiten einer vorgegebenen Fahrzeuggeschwindigkeit das Signal zur Verlagerung einer Achslast von der letzten Hinterachse (15, 30) des oder der Anhängefahrzeuge (12, 26, 32) auf die wenigstens eine davor angeordnete Hinterachse (13, 14; 29) erzeugt und an eine geeignete Betätigungsvorrichtung dieser Hinterachse (13, 14; 29) übertragen wird.

4. Verfahren nach einem der Ansprüche 1 bis 3, **dadurch gekennzeichnet, dass** die Verlagerung der Achslast nur bis zu einer dadurch verursachten Grenz-Überlastung der davor angeordnete Hinterachse (13, 14; 29) erfolgt.

5. Verfahren nach Anspruch 4, **dadurch gekennzeichnet, dass** die Grenz-Überlastung der gesetzlich maximal zulässigen Achslast entspricht.

6. Verfahren nach einem der Ansprüche 1 bis 5, **dadurch gekennzeichnet, dass** der aktuelle Kurvenradius durch eine automatische Auswertung der unterschiedlichen Radgeschwindigkeiten der linken und rechten Räder (2a, 2b; 3a, 3b; 4a, 4b; 9a, 9b; 10a, 10b) einer der Achsen (2, 3, 4, 9, 10) des Zugfahrzeugs (1) oder des ersten Anhängefahrzeugs (8) erkannt wird.

7. Verfahren nach einem der Ansprüche 1 bis 5, **dadurch gekennzeichnet, dass** der aktuelle Kurvenradius durch eine automatische Auswertung einer Lenkradbetätigung des Zugfahrzeugs (1) bestimmt wird.

8. Lastzug (40), ausgebildet zur Durchführung des Verfahrens nach einem der Verfahrensansprüche, bestehend aus einem Zugfahrzeug (1) mit mindestens einer Vorderachse (2) und mindestens einer Hinterachse (3, 4) sowie mit zwei Anhängefahrzeugen (8, 12), wobei das an das Zugfahrzeug (1) angekuppelte Anhängefahrzeug (8) als kurzer Anhänger (Dolly) mit einer Sattelkupplung (11) zur Aufnahme eines zweiten, als Sattelauflieger ausgebildeten Anhängefahrzeugs (12) ausgebildet ist, und bei dem das zweite Anhängefahrzeug (12) mindestens zwei Hinterachsen (13, 14, 15) aufweist, bei dem an jedem der beiden Anhängefahrzeuge (8, 12) Einrichtungen (17a, 17b; 18a, 18b; 19a, 19b; 20, 21, 23) angeordnet sind, mittels denen eine Verlagerung einer Achslast von der jeweils letzten Hinterachse (10, 15) auf jeweils die wenigstens eine davor angeordnete Hinterachse (9, 14) der beiden Anhängefahrzeuge (8, 12) durchführbar ist.

9. Lange Lastzug-Kombination (41), ausgebildet zur Durchführung des Verfahrens nach einem der Verfahrensansprüche, bestehend aus einem Zugfahrzeug (1) mit mindestens einer Vorderachse (2) und einer Hinterachse (3, 4) sowie mit mehr als zwei Anhängefahrzeugen (26, 31, 32, 33) mit jeweils mindestens zwei Hinterachsen (14, 15; 29, 30), bei dem an jedem der mehr als zwei Anhängefahrzeuge (26, 31, 32, 33) Einrichtungen (17a, 17b; 18a, 18b; 19a, 19b; 20, 21, 23) angeordnet sind, mittels denen eine Verlagerung einer Achslast von der jeweils letzten Hinterachse (15, 30) auf jeweils die wenigstens eine davor angeordnete Hinterachse (14, 29) der mehr als zwei Anhängefahrzeuge (26, 31, 32, 33) durchführbar ist.

10. Steuerungsgerät (23), welches zur Durchführung des Verfahrens nach einem der Ansprüche 1 bis 7 ausgebildet ist.

## Claims

1. Method for reducing the turning circle of a road train (40, 41) which has at least two trailer vehicles, composed of a tractor vehicle (1) with at least one front axle (2) and at least one rear axle (3, 4) as well as with at least one trailer vehicle (12, 26, 31, 32, 33) with at least two rear axles (13, 14, 15; 29, 30), and with a device for automatically moving an axle load from the last rear axle (15; 30) to the at least one rear axle (13, 14; 29) arranged in front of the latter if cornering is detected, **characterized in that** in the case of a road train (40, 41) with at least two trailer vehicles (12, 26, 31, 32, 33) the radius of a bend which is currently being travelled along is determined, **in that** when the determined bend radius is smaller than a previously defined limiting bend radius a signal for moving an axle load from the last rear axle (15; 30) to the at least one rear axle (13, 14; 29) arranged in front of the latter, at least of the last trailer vehicle (12, 26, 31, 32, 33) is generated, and **in that** this signal is transmitted to a suitable activation device on this at least one rear axle (13, 14; 29) which is arranged in front of said last near axle, wherein when a limiting bend radius is undershot a signal to move an axle load from the last rear axle (15, 30) to the at least one rear axle (13, 14; 29) arranged in front of the latter of each trailer vehicle (12, 26, 31, 32, 33) is generated and is transmitted to the activation device of these rear axles (13, 29) which are arranged in front of said last rear axle.

2. Method according to Claim 1, **characterized in that** the tractor vehicle (1) has at least two rear axles (3, 4), and **in that** when the limiting bend radius is undershot, the signal for moving an axle load from the last rear axle (15, 30) of the trailer vehicle or vehicles (12, 26, 31, 32, 33) is also transmitted to an activation device for moving an axle load from the last rear axle (4) of the tractor vehicle (1) to the at least one rear axle (3), arranged in front of the latter, of the tractor vehicle (1).

3. Method according to one of Claims 1 to 2, wherein at least the trailer vehicle (8) which is coupled to the tractor vehicle (1) is embodied as a short trailer (dolly), with a fifth-wheel coupling (11) for receiving a trailer vehicle (12, 26, 32) which is embodied as a semi-trailer, **characterized in that** when the limiting bend radius is undershot and a predefined vehicle speed is undershot, the signal for moving an axle load from the last rear axle (15, 30) of the trailer vehicle or vehicles (12, 26, 32) to the at least one rear axle (13, 14; 29) arranged in front of the latter is generated and transmitted to a suitable activation device of this rear axle (13, 14; 29).

4. Method according to one of Claims 1 to 3, **characterized in that** the axle load is moved only as far as a limiting overload, caused thereby, of the rear axle (13, 14; 29) which is arranged in front of said axle load.

5. Method according to Claim 4, **characterized in that** the limiting overload corresponds to the legally maximum permissible axle load.

6. Method according to one of Claims 1 to 5, **characterized in that** the current bend radius is detected by an automatic evaluation of the different wheel speeds of the left-hand and right-hand wheels (2a, 2b; 3a, 3b; 4a, 4b; 9a, 9b; 10a, 10b) of one of the axles (2, 3, 4, 9, 10) of the tractor vehicle (1) or of the first trailer vehicle (8).

7. Method according to one of Claims 1 to 5, **characterized in that** the current bend radius is determined by an automatic evaluation of a steering wheel activation of the tractor vehicle (1).

8. Road train (40) designed to carry out the method according to one of the method claims, composed of a tractor vehicle (1) with at least one front axle (2) and at least one rear axle (3, 4) and with two trailer vehicles (8, 12), wherein the trailer vehicle (8) which is coupled to the tractor vehicle (1) is embodied as a short trailer (dolly) with a fifth-wheel coupling (11) for receiving a second trailer vehicle (12) which is embodied as a semi-trailer, and in which the second trailer vehicle (12) has at least two rear axles (13, 14, 15), in which devices (17a, 17b; 18a, 18b; 19a, 19b; 20, 21, 23) are arranged on each of the two trailer vehicles (8, 12) and can be used to execute the movement of an axle load from the respective last rear axle (10, 15) to, in each case, the at least one rear axle (9, 14) arranged in front of the latter of the two trailer vehicles (8, 12).

9. Long road train combination (41) designed to carry out the method according to one of the method claims, composed of a tractor vehicle (1) with at least one front axle (2) and one rear axle (3, 4) as well as with more than two trailer vehicles (26, 31, 32, 33) with, in each case, at least two rear axles (14, 15; 29, 30), in which devices (17a, 17b; 18a, 18b; 19a, 19b; 20, 21, 23) are arranged on each of the more than two trailer vehicles (26, 31, 32, 33) and can be used to execute movement of an axle load from the respective last rear axle (15, 30) to, in each case, the at least one rear axle (14, 29), arranged in front of the latter, of the more than two trailer vehicles (26, 31, 32, 33).

10. Controller (23) which is designed to carry out the method according to one of Claims 1 to 7.

## Revendications

1. Procédé de diminution du rayon de braquage d'un train routier (40, 41), qui présente au moins deux remorques, se composant d'un tracteur (1) avec au moins un essieu avant (2) et au moins un essieu arrière (3, 4) ainsi qu'avec au moins une remorque (12, 26, 31, 32, 33) avec au moins deux essieux arrière (13, 14, 15; 29, 30), et avec un dispositif pour le déplacement automatique d'une charge d'essieu du dernier essieu arrière (15; 30) audit au moins un essieu arrière précédent (13, 14; 29), dans la mesure où on détecte un parcours en courbe, **caractérisé en ce que** dans le cas d'un train routier (40, 41) comprenant au moins deux remorques (12, 26, 31, 32, 33) on détermine le rayon de la courbe actuellement parcourue, **en ce que**, lorsque le rayon de courbure déterminé est plus petit qu'un rayon de courbure limite fixé au préalable, on produit un signal pour le déplacement d'une charge d'essieu du dernier essieu arrière (15; 30) sur ledit au moins un essieu arrière précédent (13, 14; 29) au moins de la dernière remorque (12, 26, 31, 32, 33), et **en ce que** l'on transmet ce signal à un dispositif d'actionnement approprié sur ledit au moins un essieu arrière précédent (13, 14; 29), dans lequel en cas de descente en dessous du rayon de courbure limite on produit un signal pour le déplacement d'une charge d'essieu du dernier essieu arrière (15, 30) audit au moins un essieu arrière précédent (13, 14; 29) de chaque remorque (12, 26, 31, 32, 33) et on le transmet au dispositif d'actionnement de ces essieux arrière précédents (13, 29).

2. Procédé selon la revendication 1, **caractérisé en ce que** le tracteur (1) présente au moins deux essieux arrière (3, 4), et **en ce qu'**en cas de descente en dessous du rayon de courbure limite on transmet le signal pour le déplacement d'une charge d'essieu du dernier essieu arrière (15, 30) de la ou des remorque(s) (12, 26, 31, 32, 33) également à un dispositif d'actionnement pour le déplacement d'une charge d'essieu du dernier essieu arrière (4) du tracteur (1) audit au moins un essieu arrière précédent (3) du tracteur (1) .

3. Procédé selon une des revendications 1 à 2, dans lequel au moins la remorque (8) attelée au tracteur (1) est formée par une remorque courte (chariot), avec une sellette d'attelage (11) destinée à recevoir une remorque (12, 26, 32) formée par une semi-remorque, **caractérisé en ce qu'**en cas de descente en dessous du rayon de courbure limite et de descente en dessous d'une vitesse de véhicule prédéterminée, on produit le signal pour le déplacement d'une charge d'essieu du dernier essieu arrière (15, 30) de la ou des remorques (12, 26, 32) audit au moins un essieu arrière précédent (13, 14; 29) et on le transmet à un dispositif d'actionnement approprié de cet essieu arrière (13, 14; 29) .

4. Procédé selon l'une quelconque des revendications 1 à 3, **caractérisé en ce que** l'on n'effectue le déplacement d'une charge d'essieu que jusqu'à une surcharge limite ainsi provoquée de l'essieu arrière précédent (13, 14; 29).

5. Procédé selon la revendication 4, **caractérisé en ce que** la surcharge limite correspond à la charge par essieu maximale légalement admissible.

6. Procédé selon l'une quelconque des revendications 1 à 5, **caractérisé en ce que** l'on détecte le rayon de courbure actuel par une analyse automatique des différentes vitesses de roue des roues gauches et droites (2a, 2b; 3a, 3b; 4a, 4b; 9a, 9b; 10a, 10b) d'un des essieux (2, 3, 4, 9, 10) du tracteur (1) ou de la première remorque (8).

7. Procédé selon l'une quelconque des revendications 1 à 5, **caractérisé en ce que** l'on détermine le rayon de courbure actuel par une analyse automatique d'un actionnement du volant de direction du tracteur (1).

8. Train routier (40), configuré pour la mise en oeuvre du procédé selon l'une quelconque des revendications de procédé, se composant d'un tracteur (1) avec au moins un essieu avant (2) et au moins un essieu arrière (3, 4) ainsi qu'avec deux remorques (8, 12), dans lequel la remorque (8) attelée au tracteur (1) est formée par une remorque courte (chariot) avec une sellette d'attelage (11) destinée à recevoir une deuxième remorque (12) formée par une semi-remorque, et dans lequel la deuxième remorque (12) présente au moins deux essieux arrière (13, 14, 15), dans lequel des dispositifs (17a, 17b; 18a, 18b; 19a, 19b; 20, 21, 23) sont disposés sur chacune des deux remorques (8, 12), au moyen desquels il est possible d'effectuer un déplacement d'une charge d'essieu du dernier essieu arrière respectif (10, 15) respectivement audit au moins un essieu arrière précédent (9, 14) des deux remorques (8, 12).

9. Long train routier combiné (41), configuré pour la mise en oeuvre du procédé selon l'une quelconque des revendications de procédé, se composant d'un tracteur (1) avec au moins un essieu avant (2) et au moins un essieu arrière (3, 4) ainsi qu'avec plus de deux remorques (26, 31, 32, 33) ayant respectivement au moins deux essieux arrière (14, 15; 29, 30), dans lequel des dispositifs (17a, 17b; 18a, 18b; 19a, 19b; 20, 21, 23) sont disposés sur chacune des plus de deux remorques (26, 31, 32, 33), au moyen desquels il est possible d'effectuer un déplacement d'une charge d'essieu du dernier essieu arrière respectif (15, 30) respectivement audit au moins un essieu arrière précédent (14, 29) des plus de deux remorques (26, 31, 32, 33).

10. Appareil de commande (23), qui est conçu pour la mise en oeuvre du procédé selon l'une quelconque des revendications 1 à 7.
